(19) **Europäisches Patentamt / European Patent Office / Office européen des brevets**

(11) **EP 3 717 936 B1**

(12) **FASCICULE DE BREVET EUROPEEN**

(45) Date de publication et mention de la délivrance du brevet:
**25.06.2025 Bulletin 2025/26**

(21) Numéro de dépôt: **18808008.9**

(22) Date de dépôt: **27.11.2018**

(51) Classification Internationale des Brevets (IPC):
**G01S 7/53** *(2006.01)*   **G01S 7/00** *(2006.01)*
**H04L 12/40** *(2006.01)*   **G01V 1/20** *(2006.01)*

(52) Classification Coopérative des Brevets (CPC):
**G01S 7/53; G01S 7/003; G01V 1/201; H04L 12/40182**

(86) Numéro de dépôt international:
**PCT/EP2018/082732**

(87) Numéro de publication internationale:
**WO 2019/105948 (06.06.2019 Gazette 2019/23)**

(54) **SYSTÈME DE COLLECTE ET DE DISTRIBUTION DES DONNÉES CAPTEURS DANS UNE ANTENNE ACOUSTIQUE LINÉAIRE REMORQUÉE**

SYSTEM ZUM SAMMELN UND VERTEILEN VON SENSORDATEN IN EINER GEZOGENEN LINEAREN AKUSTISCHEN ANTENNE

SYSTEM FOR COLLECTING AND DISTRIBUTING SENSOR DATA IN A TOWED LINEAR ACOUSTIC ANTENNA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.11.2017 FR 1701251**

(43) Date de publication de la demande:
**07.10.2020 Bulletin 2020/41**

(73) Titulaire: **Thales**
**92190 Meudon (FR)**

(72) Inventeurs:
• **FASSY, Olivier**
  **06903 Sophia-Antipolis (FR)**
• **NORMAND, François**
  **06903 Sophia-Antipolis (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
EP-A1- 2 869 091      FR-A1- 2 963 127
US-A1- 2009 140 879   US-B1- 6 816 082

**Description**

*DOMAINE DE L'INVENTION*

L'invention concerne le domaine des antennes acoustiques linéaires remorquées numériques, de technologie électro-acoustique conventionnelle et plus particulièrement les systèmes électroniques de télémétrie assurant la numérisation des signaux générés par l'ensemble des hydrophones acoustiques constituant une telle antenne et par des capteurs non acoustiques ou "NAS" selon l'acronyme de la dénomination anglo-saxonne "Non Acoustic Sensor" (capteurs de température, d'immersion, de cap, de roulis/tangage, etc....) nécessaires au traitement de signal des voies Sonar et à leur exploitation.

L'invention concerne directement un procédé et un système de collecte et de distribution des données capteurs dans un système électronique de télémétrie d'une antenne acoustique linéaire remorquée.

*CONTEXTE DE L'INVENTION - ART ANTERIEUR*

Un système classique de télémétrie d'une antenne acoustique comporte généralement les fonctions suivantes à :

- une fonction de distribution de synchronisation antenne (top échantillonnage antenne, horloge rapide...);
- une fonction d'acquisition de données, ou DAU ( acronyme de la dénomination anglo-saxonne "Digital Acquisition Module"), classiquement réalisée par des modules de traitement analogique et de numérisation, répartis régulièrement à l'intérieur d'une antenne ou de différents tronçons d'antenne en suivant l'agencement linéaire des hydrophones (ou des groupes d'hydrophones). Ces modules sont synchronisés par un signal de synchro antenne depuis un/des modules de Synchro antenne et alimentés via des modules d'alimentation antenne;
- une fonction de collecte des données antenne réalisant l'acheminement de l'ensemble des données antenne numérisées vers le récepteur qui en réalise le traitement généralement placé à bord du vaisseau qui tracte (remorque) l'antenne. Cette fonction est classiquement réalisée par un/des modules de Multiplexage antenne, synchronisés par un signal de synchro antenne et alimenté via des modules d'alimentation antenne.
- une fonction d'alimentation en énergie électrique des modules d'acquisition et des modules assurant les fonctions systèmes de synchronisation et de collecte de données.

Pour assurer la collecte des données produites par les différents capteurs formant une antenne et leur remontées vers le récepteur de bord, il est connu de mettre en place diverses architectures, ces architectures connues étant bâties sur des groupements de modules d'acquisition de données, ou Data Acquisition Unit (DAU) selon la dénomination anglo-saxonne. Chaque unité d'acquisition collecte les données produites par les différents capteurs dont elle a la gestion et assure leur remontée vers le récepteur.

Pour assurer la remontée des informations capteurs via les DAU jusqu'au récepteur, il existe une grande variété d'architectures de transmission de données.

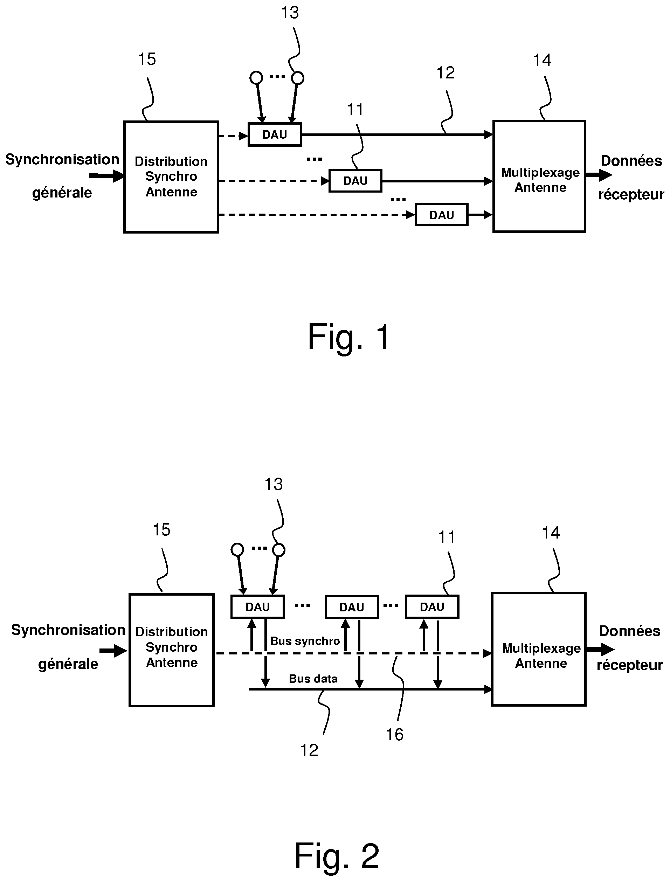

Certaines architectures de transfert de données sont basées sur un principe de remontée des données en parallèle, illustré par la figure 1.

Chaque DAU 11 transmet sur un bus particulier 12 les données des capteurs 13 dont elle a la charge, ces données étant finalement multiplexées 14 au niveau de la tête de l'antenne (i.e. l'extrémité reliée au navire tracteur) pour être transmise au récepteur de bord.

Les limites d'une topologie entièrement parallèle sont le grand nombre de fils nécessaires pour synchroniser/collecter l'information (plusieurs dizaines de fils pour une antenne avec quelques centaines d'hydrophones).

Par ailleurs, si une telle architecture offre une robustesse excellente du système au niveau des DAU 11 (la perte d'information en provenance d'une DAU n'entraine pas la perte des informations transmises par d'autres DAU) cette robustesse apparaît inexistante au niveau de la collecte de donnée globale (tête et queue d'antenne en général).

Par suite, cette topologie n'est pas utilisable pour des antennes de grandes tailles du fait d'une densité rédhibitoire de câblage nécessaire à sa mise en œuvre et de la faible robustesse système.

D'autres architectures sont basées sur un principe de remontée des données en série sur un BUS de données commun, comme illustré par la figure 2. Chaque DAU 11 comporte alors des moyens lui permettant d'insérer les données produites par les capteurs 13 dont elle assure la gestion sur le BUS de donné commun 12.

Dans de telles architectures, les fonctions systèmes de distribution de synchro et collecte de donnée sont réalisées sous forme de bus 12 et 16, ce qui limite l'utilisation d'une telle configuration à des antennes comportant seulement quelques dizaines de canaux et présentant une longueur acoustique limitée, des antennes non dédié ETBF et encore moins UBF. En effet, de manière connue, la capacité de multiplexage temporel sur un même bus est limitée, par les effets de la longueur de la ligne et du nombre d'abonnés sur le bus sur les paramètres du bus (fréquence bus, étalement symboles et génération d'interférence inter-symboles...).

Si la robustesse d'une telle architecture peut être assurée correctement au niveau des DAU 11, à condition toutefois que ces unités soient équipées de dispositifs de protection contre les courts-circuits sur le bus actif de données 12, ce qui accroit la complexité des DAU 11 au détriment de leur fiabilité intrinsèque, elle est toutefois inexistante au niveau des fonctions systèmes de synchronisation 15 et collecte de donnée globale 16 (bus et multiplexage de tête d'antenne).

Par suite une telle topologie ne fonctionne pas pour des antennes de grandes tailles (fonctionnement des bus rédhibitoire sur une grande longueur d'antenne qui plus est avec de nombreux abonnés) et présente une robustesse système médiocre.

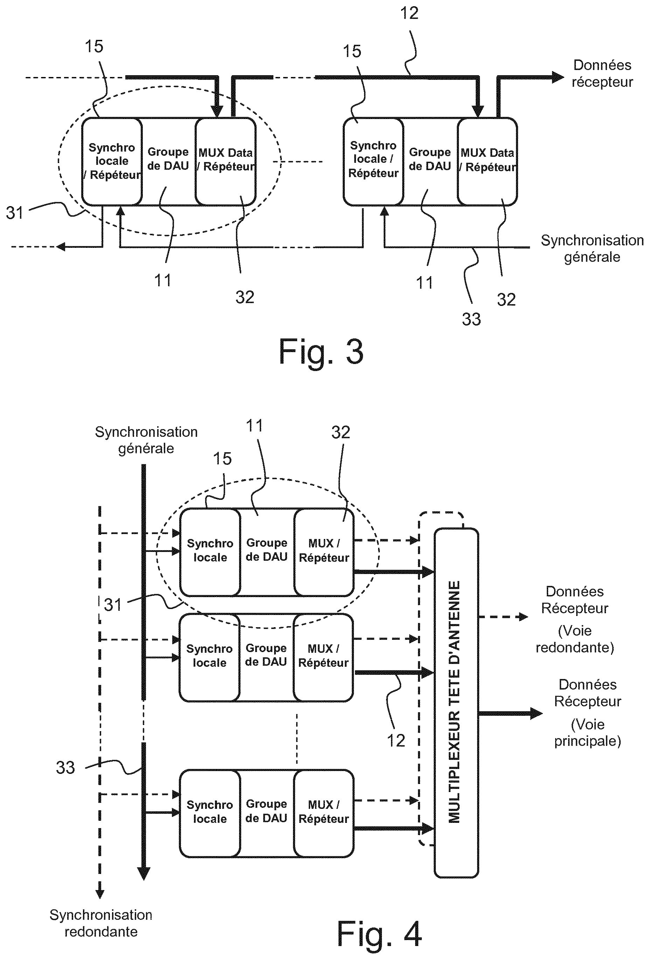

Face aux faiblesses des architectures de base, notamment pour ce qui concerne leur utilisation dans des antennes de grandes longueurs, des solutions améliorées sont généralement employées. Comme l'illustrent les figures 3 et 4, ces solutions consistent à réaliser, dans le cadre de l'utilisation d'une topologie série ou parallèle, une décomposition du système global en sous-ensembles 31 regroupant chacun un nombre donné d'unités d'acquisition.

Dans de telles architectures, les données produites par les différentes DAU 11 d'un même groupe sont multiplexées localement 32 au niveau du groupe et peuvent être transmises vers le récepteur par un bus unique 12, comme l'illustre la figure 3. Le système est ainsi décomposé en N sous-systèmes 31 (pour limiter la longueur et le nombre d'abonnés par bus) avec introduction de répéteurs pour véhiculer les fonctions systèmes.

Ainsi, le nombre de liaisons câblées est avantageusement réduit. Cependant la robustesse du système reste médiocre, une panne critique au niveau d'un sous-ensemble entraînant une panne totale de la transmission de données.

Alternativement les données produites par les différentes DAU 11 d'un même groupe 31 sont multiplexées localement 32 au niveau du groupe et peuvent être ensuite acheminées par des voies (des bus) parallèles 12 vers un système de multiplexage 41 placé en tête d'antenne, comme l'illustre la figure 4.

Afin d'améliorer la robustesse système (tolérance aux pannes) et réduire la densité de câblage par rapport à une configuration parallèle simple telle que celle de la figure 1, le système global est ainsi partagé en N sous-systèmes (Groupe locaux de N canaux d'acquisition).

Deux sous-systèmes adjacents peuvent éventuellement être imbriqués pour former des canaux de données pairs et impairs.

Par rapport à une configuration parallèle simple, la robustesse système d'un tel dispositif se trouve améliorée du fait en particulier de la redondance introduite au niveau de la transmission des données (bus redondé) et au niveau de la tête antenne. Cependant, le nombre et le type d'objets différents introduits et la densité de câblage apparaissent beaucoup trop importants (câblage antenne lourd) pour qu'une telle structure puisse constituer une solution réellement exploitable.

Par ailleurs, la perte d'un module élémentaire entraine au moins la perte d'un sous-ensemble de canaux d'acquisition.

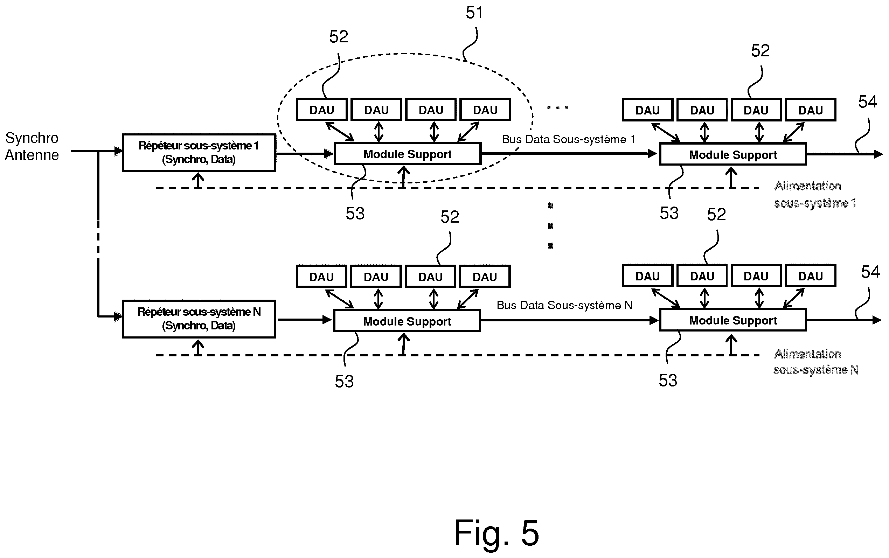

Pour atténuer, voire minimiser les inconvénients des architectures décrites précédemment, il est également connu d'utiliser des architecture plus complexes, combinant de manière variée des topologies séries et parallèles. Plusieurs combinaisons de topologie parallèle/série sont possibles et peuvent donner lieu à un nombre important de configurations. L'exemple de la figure 5 présente un exemple d'architecture, dans laquelle on met en parallèle des blocs de sous-ensembles 51 montés en série, sous-ensembles dans lesquels les données des unités d'acquisition 52 sont collectées en série par un module support 53 et transmise vers la tête d'antenne via un bus de données série 54 commun au autre sous-ensemble du même bloc.

Cependant, les architectures matérielles issues de telles combinaisons ne proposent que des solutions de compromis qui ne permettent pas de satisfaire les exigences liées à la nécessité de limiter à la fois la masse représentée par le câblage, le nombre de type d'objets et de garantir la robustesse du système de collecte de données mis en œuvre face aux panne pouvant intervenir localement au niveau d'une ou plusieurs unité d'acquisition ou DAU (Data Acquisition Unit selon la dénomination anglo-saxonne).

Ainsi, concernant la remontée des données capteurs vers le récepteur, on se trouve affronté, dans le cas d'une antenne sonar linéaire en particulier à un double problème qui se traduit par des exigences un peu contradictoires. Ce double problème consiste d'une part à limiter la masse formée par l'ensemble des connexions nécessaires pour faire remonter vers le récepteur les données sonar produites par les différentes unités d'acquisition. Il consiste d'autre part à assurer la plus grande robustesse possible concernant la remontée des données en limitant les conséquences de la survenue d'un problème de connexion à un endroit ou à un autre de la chaine de transmission des données sonar vers le récepteur.

Le document EP 2869091 divulgue un procédé pour contourner une unité en réseau. En particulier, la méthode comprend, dans une flûte marine remorquée par un navire hydrographique, la détection d'une première interconnexion d'une guirlande, la première interconnexion entre une première unité en réseau et une deuxième unité en réseau, la première unité en réseau et la une deuxième unité en réseau comprend une partie d'une pluralité d'unités en réseau ; et déterminer qu'une condition de défaut existe sur la première interconnexion en réponse à la détection ; désactiver la première interconnexion en réponse à la condition de défaut ; activer une deuxième interconnexion en réponse à la condition de panne, dans lequel la deuxième interconnexion couple la première unité en réseau et une troisième unité en réseau de la pluralité d'unités en réseau et dans lequel la deuxième interconnexion ne se couple pas à la deuxième unité en réseau ; et rapporter des informations indicatives de la condition de panne au navire hydrographique via la seconde unité en réseau.

*PRESENTATION DE L'INVENTION*

Un but de l'invention est de proposer une solution alternative aux solutions existantes pour collecter les données capteurs et remonter ces données vers la tête d'antenne et le récepteur de bord.

Un autre but de l'invention est de proposer une solution permettant à la fois de limiter la masse constitué par le réseau de câblage permettant de réaliser la collecte et l'acheminement des données sonar, et de disposer d'un système robuste capable de continuer à fonctionner même en présence d'une pluralité d'unités d'acquisition défaillantes.

A cet effet l'invention a pour objet un système de collecte des données fournies par une chaine de capteurs constituant une antenne acoustique linéaire, la collecte et la remontée des données vers le système de collecte des données de l'antenne étant organisées autour de modules d'acquisition des données capteurs, ou HUBs, chainés les uns aux autres, chaque HUB gérant la collecte et la remontée des données produites par un nombre donné de capteurs. Dans le système selon l'invention chaque HUB de rang n ($HUB_n$) est configuré pour:

- recevoir simultanément, sur une première entrée, reliée au HUB de rang n-1 situé immédiatement en amont ($HUB_{n-1}$), un flux de données capteurs constituant une première suite de trames de données provenant dudit HUB et sur une seconde entrée, reliée au HUB situé i rangs en amont ($HUB_{n-i}$), un flux de données capteurs constituant une seconde suite de trames de données provenant de ce dernier, i étant supérieur à 1 ;
- intégrer dans chaque trame de données, reçue sur la première ou la seconde entrée selon la présence ou non d'un flux de données sur l'une ou l'autre des entrées, les données capteurs synchrones de ladite trame, produites par les différents capteurs gérés par lui et produire une trame complétée; et
- délivrer cette trame complétée sur deux sorties séparées, reliées respectivement au HUB situé immédiatement en aval ($HUB_{n+1}$) et au HUB situé i rangs en aval ($HUB_{n+i}$).

Selon différentes dispositions pouvant être considérées chacune séparément ou en combinaison avec d'autres, le procédé selon l'invention peut comporter diverse dispositions énumérées ci-après.

Selon une première disposition, chaque HUB comporte une première batterie de registres configurée pour permettre la mémorisation des données capteurs produites à chaque période d'échantillonnage, le temps nécessaire pour permettre leur intégration à la trame de données correspondant à la même période d'échantillonnage.

Selon une autre disposition, i étant égal à 3, chaque HUB de rang n ($HUB_n$) est configuré de telle sorte que si un flux de données est présent sur sa première entrée, ledit $HUB_n$ intègre, à chacune des trames successives transmises par le HUB situé immédiatement en amont ($HUB_{n-1}$) et reçues sur cette première entrée, les données synchrones de ladite trame produites par les différents capteurs gérés par lui, et produit une trame complétée qu'il transmet au HUB situé immédiatement en aval ($HUB_{n+1}$) et au HUB situé trois rangs en aval ($HUB_{n+3}$).

Selon une autre disposition, i étant égal à 3, chaque HUB de rang n ($HU_{Bn}$) est configuré de telle sorte que si aucun flux de données n'est présent sur sa première entrée, ledit $HUB_n$ intègre, à chacune des trames successives reçues sur sa seconde entrée, les données synchrones de ladite trame produites par les différents capteurs gérés par lui et produit une trame complétée qu'il transmet au HUB situé immédiatement en aval ($H_{UBn+1}$) et au HUB situé trois rangs en aval ($HUB_{n+3}$).

Selon une autre disposition, chaque HUB de rang n ($HUB_n$) est configuré de telle sorte que si un flux de données est présent sur chacune de ses entrées, ledit $HUB_n$ intègre, à chacune des trames successives reçues par sa première entrée, les données synchrones de ladite trame produites par les différents capteurs gérés par lui ainsi que les données produites par les différents capteurs gérés par le HUB de rang n-3 ($HUB_{n-3}$), recueillies sur la trame de données reçue sur sa seconde entrée synchrone de la trame de données reçue sur sa première entrée, et produit une trame complétée qu'il transmet au HUB situé immédiatement en aval ($HUB_{n+1}$) et au HUB situé trois rangs en aval ($HUB_{n+3}$).

Selon une autre disposition, chaque HUB comporte en outre une seconde batterie de registres configurée pour permettre la mémorisation des données produites par le HUB de rang n-3 ($HUB_{n-3}$) à chaque période d'échantillonnage le temps nécessaire pour permettre leur intégration à la trame de données correspondant à la même période d'échantillonnage.

*DESCRIPTION DES FIGURES*

Les caractéristiques et avantages de l'invention seront mieux appréciés grâce à la description qui suit, description qui s'appuie sur les figures annexées qui présentent:

Les figures 1 à 5, des illustrations schématiques relatives à des systèmes de collecte et de remontée de données capteurs, connus de l'art antérieur;

la figure 6, une représentation schématique d'un système de télémétrie pour antenne acoustique linéaire remorquée incorporant le système de collecte et de remontée des données capteurs selon l'invention;

la figure 7, une illustration schématique détaillée du principe de fonctionnement du système de collecte et de remontée des données capteurs selon l'invention;

les figures 8 et 9, des diagrammes temporels illustrant le fonctionnement du mécanisme de synchronisation des données capteurs et des trames de données au sein d'un HUB.

Il est à noter que, sur les figures annexées, un même élément fonctionnel ou structurel porte de préférence un même symbole repère.

*DESCRIPTION DETAILLEE*

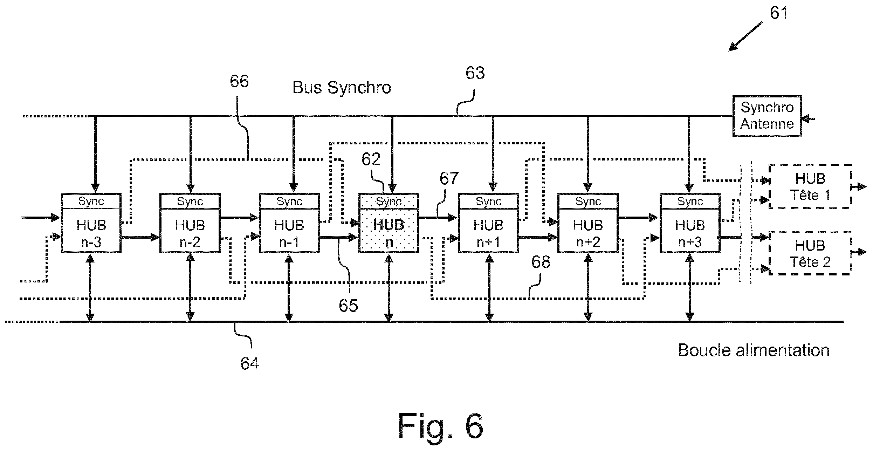

Le système de collecte de données antenne selon l'invention, s'intègre dans un système global de télémétrie 61, représenté de manière schématique sur la figure 6, dans lequel les différents senseurs acoustiques (hydrophones) constituant l'antenne, sont gérés par un ensemble de modules d'acquisition 62 ou HUB. Chaque HUB gère un groupe donné de senseurs acoustiques et est repéré par son rang n qui correspond à la position occupée par les senseurs acoustique qui lui sont associés. Les HUBs ainsi agencés forment une chaîne chaque HUB étant repéré par son rang dans la chaîne.

Par suite un hub de rang n est placé dans la chaine des HUBs entre le HUB de rang n-1, situé en amont du HUB considéré, c'est-à-dire plus proche de l'extrémité libre de l'antenne (queue d'antenne) et le HUB de rang n+1, situé en aval du HUB considéré, c'est-à-dire plus proche de l'extrémité opposée à l'extrémité libre de l'antenne (tête d'antenne), par laquelle l'antenne est tractée et communique avec les équipement placés à bord du navire tracteur.

Dans le cadre du système de télémétrie considéré 61, chaque Hub reçoit de plus une information de synchronisation, via un bus de synchronisation commun 63.

Chaque HUB est en outre alimenté en énergie électrique par une boucle d'alimentation générale 64.

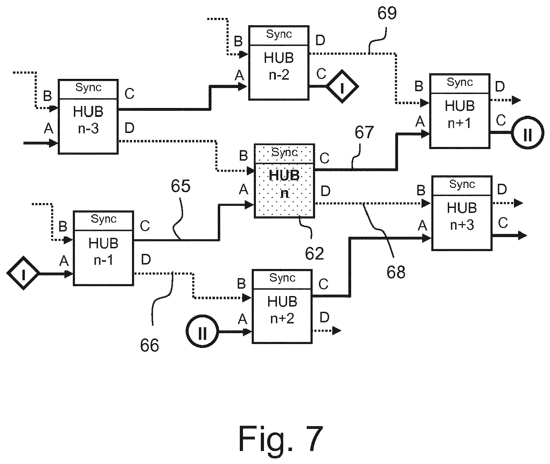

Selon l'invention la collecte des données provenant des différents capteurs et la remontée de ces données vers la tête antenne suit un mécanisme de type "Leapfrog" ("saute-mouton"). Selon ce mécanisme, illustré de manière plus détaillée par la figure 7, chaque HUB 62 de rang n reçoit du Hub de rang n-1, HUB n-1, qui le précède dans la chaîne (i.e. en amont dans la chaine), un BUS de données 65 véhiculant les trames de données numériques correspondant aux signaux reçus par le HUB n-1 sur lequel ce dernier a inséré les données délivrées par les différents senseurs dont il assure la gestion.

Chaque HUB 62 de rang n reçoit également d'un Hub de rang inférieur $HUB_{n-i}$ (i = 1, 2, 3, 4, etc....) un BUS de données 66 véhiculant les trames de données numériques correspondant aux signaux reçus par le $HUB_{n-i}$ sur lequel ce dernier a inséré les données délivrées par les différents senseurs dont il assure la gestion.

Par ailleurs, chaque HUB restitue sur deux bus distincts 67 et 68 les trames de données numériques transmises respectivement par le HUB de rang n-1, $HUB_{n-1}$, et par le HUB de rang n-i, $HUB_{n-i}$ sur lesquels il a inséré les données délivrées par les différents senseurs dont il assure la gestion.

Ainsi, avantageusement la collecte des données et la remontée des données collectées vers la tête antenne (i.e. vers l'aval) sont réalisées par l'intermédiaire de i+1 bus distincts:

-    un bus principal qui, du point de vue de la collecte des données capteurs, assure un chainage série direct des HUBs les uns par rapport aux autres ; un HUB de rang n étant relié par ce bus au HUB de rang n-1 qui le précède immédiatement dans la succession des capteurs;
-    i bus auxiliaires qui assurent la collecte des données capteurs de manière discontinue un HUB de rang n étant chainé par un bus auxiliaire donné aux HUBs de rang n-i et n+i.

Selon l'invention, la valeur du saut i est supérieure à 1. Cependant, dans une forme de mise en œuvre préférée, illustrée par les figures 6 et 7, cette valeur est égale à 3. On parle alors de mécanisme Leapfrog de rang 2.

La suite du texte décrit le principe de fonctionnement du système de collecte et de remontée des informations capteurs selon l'invention dans le cas illustré par les figures 6 et 7, où i est égal à 3 (Leapfrog de rang 2).

Dans une forme simple de mise en œuvre du système de collecte et de remontées des données capteur selon l'invention, on a, pour un HUB de rang n donné et dans un mode de fonctionnement nominal, c'est-à-dire en présence de données sur l'entrée A du HUB considéré:

$$GDS(C) = GDS(D) = GDS(A) + Data\_HUB_n$$

GDS(A), GDS(C) et GDS(D) représentent respectivement les flux de données transmis à l'entrée du HUB n par le HUB$_{n-1}$ et les flux de sortie délivrés par le même HUB n respectivement au HUB$_{n+1}$ et au HUB$_{n+3}$. Data_HUB$_n$ représente les données capteurs collectées localement par le HUB$_n$.

En revanche en cas d'absence de données sur l'entrée A, on a:

$$GDS(C) = GDS(D) = GDS(B) + Data\_HUB_n;$$

le flux de données GDS(B) transmis à l'entrée B du HUB$_n$ par le HUB$_{n-3}$.

Ainsi, avantageusement, en cas d'avarie (dysfonctionnement du HUB$_{n-1}$ ou rupture de la liaison de donnée entre le HUB$_{n-1}$ et le HUB$_n$), la collecte de données se poursuit par l'intermédiaire de la liaison de données GDS(D) = GDS(B) entre le HUB$_n$ et le HUB$_{n-3}$, de sorte que la perte de données reste limitée, au niveau du HUB$_n$, aux données insérées dans le flot de données par les HUBs de rangs n-2 et n-1.

La disparition des données sur l'entrée A du HUB n conduit donc seulement à l'absence des données produites au niveau des HUBs n-1 et n-2 dans les flux de données GDS(C) et GDS(D) du HUB$_n$ vers le HUB$_{n+}$1.

Dans une forme de mise en œuvre plus élaborée du système de collecte des données capteurs selon l'invention, chaque HuB$_n$ est configuré pour traiter à la fois les données GDS(C) et GDS(D) transmises respectivement sur son entrée de données A et sur son entrée de données B.

De la sorte, en absence de données sur l'entrée A du HUB$_n$, le flot de données GDS(C) transmis par celui-ci au HUB suivant, le HUB$_{n+1}$, soit complété au niveau du HUB$_{n+1}$ avec les données produites par ce dernier et les données GDS(D) transmises par le HUB$_{n-2}$ via sa sortie D (liaison de donnée 69) au HUB$_{n+1}$.

Par suite si l'avarie ayant affecté l'entrée A du HUB$_n$ est consécutive à défaillance du HUB$_{n-1}$, le flot de données finalement transmis ne comportera qu'une seule lacune: les données produites par le HUB$_{n-2}$ seront introduites dans le flot de données au niveau du HUB$_{n+1}$. La perte de données ne touchera finalement que les données produites par le HUB n-1.

De manière analogue, si l'avarie ayant affecté l'entrée A du HUB n est seulement consécutive à rupture de la liaison 65 entre la sortie C du HUB$_{n-1}$ et l'entrée A du Hub$_n$, le flot de données finalement transmis ne comportera finalement aucune lacune : les données produites par le HUB$_{n-2}$ seront introduites dans le flot de données au niveau du HUB$_{n+1}$ et les données produites par le HUB$_{n-1}$ seront introduites dans le flot de données au niveau du HUB$_{n+2}$ (liaison de donnée 66).

Ainsi dans cette seconde forme de mise en œuvre du système selon l'invention, la disparition des données sur l'entrée A du HUB$_n$ conduit donc seulement, dans le cas le plus défavorable (avarie du HUB$_{n-1}$), à l'absence, dans les flux de données GDS(C) et GDS(D) du HUB$_{n+2}$, des données produites par le HUB$_{n-1}$.

On obtient donc une régénération au moins partiel du flot de données. Cette forme de mise en œuvre procure donc une qualité de service accrue par rapport à la forme précédente.

Ce principe de collecte et de remontée de données selon l'invention, permet avantageusement de conférer à une antenne acoustique linéaire remorquée, pourvue d'un tel système de collecte et de remontée des données capteurs, une tolérance aux pannes pouvant affecter tels ou tel HUBs ou les liaisons de données entre tels ou tels HUBs.

Il permet en particulier, en cas de disfonctionnement d'un ou plusieurs HUBs d'assurer la remontée des informations capteurs fournies par au moins une partie des HUBs en état de marche, alors que dans le cas classique d'une collecte et une remontée des informations capteurs par chainage série des HUBs, l'avarie d'un HUB interrompt le transmission des données capteurs fournies par les HUBs situés en amont du HUB en panne dans la chaine de récepteurs.

Ainsi, une antenne linéaire remorquée équipée d'un système de collecte et de remontée des données capteur selon l'invention peut continuer à fonctionner, de manière dégradée, alors que plusieurs des HUBs qui la composent sont en panne, pour autant que l'on n'ait pas plus de i HUBs consécutifs en panne, c'est-à-dire 2 Hubs consécutifs dans la forme de réalisation illustrée par la figure 6.

On rappelle à ce propos qu'un HUB de rang n est dit situé en amont d'un HUB de rang n+1 s'il est localisé plus près de l'extrémité libre (la queue) de l'antenne.

Dans le texte qui précède, illustré par les figures 6 et 7, le système de collecte et de remontées des données capteurs selon l'invention est décrit comme mettant en œuvre de manière préférentielle un mécanisme Leapfrog de niveau 2. Il est bien entendu ici que la mise en œuvre d'un mécanisme Leapfrog de niveau autre que 2 peut être envisagée.

Il est à noter cependant que le choix d'un mécanisme Leapfrog de niveau 2 présente certains avantages, en particulier en comparaison d'un mécanisme Leapfrog de niveau 1.

En effet, la mise en œuvre d'un mécanisme de type Leapfrog de rang 2 procure avantageusement une bien meilleure robustesse vis-à-vis des pannes qu'un mécanisme de type Leapfrog de rang 1, pour un impact limité en termes d'accroissement de la densité du câblage nécessaire à la collecte et à la remontée des informations capteurs.

En effet la mise en place d'un mécanisme de type Leapfrog de rang 2 nécessite 4 liaisons filaires entrelacées, alors que la mise en place d'un mécanisme de type Leapfrog de rang 1 nécessite tout de même 3 liaisons.

Par ailleurs, dans la forme de mise en œuvre du système selon l'invention pour laquelle les HUBs traitent simultanément les flots de données d'entrée GDS(C) et GDS(D) provenant des HUBS situés en amont, une configuration Leapfrog de niveau 2 permet d'obtenir une redondance complète en cas de ruptures mécaniques en différents endroits de la chaîne:

- en cas de panne d'un HUB, seule les données produites par ce HUB sont perdues.
- en cas de pannes de deux HUB successifs, seules les données produites par ces 2 HUBs sont perdues.
- en cas de pannes simultanées de HUBs non adjacents, seules les données produites par les HUBs en panne sont perdues.

Il existe toutefois d'autres configurations alternatives mettant en œuvre un mécanisme Leapfrog de niveau supérieur à 2, permettant augmenter la robustesse du système de collecte de données par rapport à un système mettant en œuvre un mécanisme Leapfrog de niveau 1.

Ces autres configurations présentent un niveau de performance comparable à la configuration "Leapfrog de niveau 2" décrite précédemment, mais elles constituent en revanche un compromis robustesse système / densité de câblage / complexité en tête d'antenne avec HUB Tête moins intéressant que la configuration "Leapfrog de niveau 2".

En particulier, une configuration "Leapfrog de niveau 3" aura ainsi un mécanisme de fonctionnement très similaire à celui de la configuration "Leapfrog de niveau 2" décrit précédemment, tout en conférant au système une tolérance à la panne simultanée de 3 HUBs adjacents au lieu de 2. Cependant cette tolérance accrue est obtenue au prix d'une augmentation de la densité de câblage dans une section donnée d'antenne (5 liaisons filaires entrelacées maximum dans le cas d'une configuration "Leapfrog de niveau 3" contre seulement 4 liaisons dans le cas d'une configuration "Leapfrog de niveau 2".

Plus généralement, une configuration "Leapfrog de niveau N" conférera au système une tolérance accrue aux défaillances de HUBs (tolérance à la panne de N HUBs adjacents), au prix d'une augmentation significative de la densité de câblage (N+2 liaisons filaires entrelacées maximum dans la cas d'une configuration "Leapfrog de niveau N", contre seulement 4 liaisons dans le cas d'une configuration "Leapfrog de niveau 2"), ce qui devient assez vite rédhibitoire dans le cadre d'antenne linéaire remorqué de petit diamètre.

Il est à noter par ailleurs que des combinaisons plus complexes, des combinaisons par exemple peuvent également être envisagées. Toutefois de telles combinaison impliquent d'augmenter le nombre d'entrées/sorties des HUBs sans garantir d'accroissement de la tolérance aux défaillances.

Ainsi par exemple une combinaison "Leapfrog de niveau 1" - "Leapfrog de niveau 2" implique l'utilisation de HUBs à 3 entrées et 3 sorties et de 6 liaisons filaires par section d'antenne; sans amélioration de la robustesse de l'ensemble par rapport à une configuration "Leapfrog de niveau 2".

D'un point de vue fonctionnel, dans le système de collecte de données selon l'invention, la transmission des données capteurs est de type asynchrone, basée sur la mise en œuvre d'une chaîne fonctionnelle faisant intervenir des fonctions ADM ou "Add Drop Mux" selon la dénomination anglo-saxonne, qui réalisent le multiplexage de données locales, produites par les différents senseurs acoustiques constituant l'antenne.

A cet effet chaque HUB met en œuvre une fonction ADM, dont le rôle est d'insérer, à l'instant approprié, les données produites par les différents senseurs acoustiques qui lui sont rattachés sur le train de données asynchrone qui traverse ledit module.

Ce mode de collecte de données suit un protocole similaire au protocole ATM ("Asynchronous Transfer Module" selon la dénomination anglo-saxonne) qui est un protocole de transmission à haut débit (i.e. débit multiple de 155 Mbps) utilisé dans les systèmes de télécommunications.

Ainsi, pour chaque HUB, la fonction ADM implémentée récupère les données transmises trame après trame, au rythme de la période $T_{ech}$ de collecte des données capteurs, par les HUBs situés en amont de la chaine Leapfrog auxquels le HUB considéré est relié.

Elle ajoute ensuite à chacune des trames reçues les données produites localement par les senseurs acoustiques connectés au HUB considéré, échantillonnées à l'instant d'échantillonnage correspondant à la trame de données considérée. Puis, elle retransmet chacune des trames ainsi complétées aux HUBs situés en aval, auxquels le HUB considéré est relié.

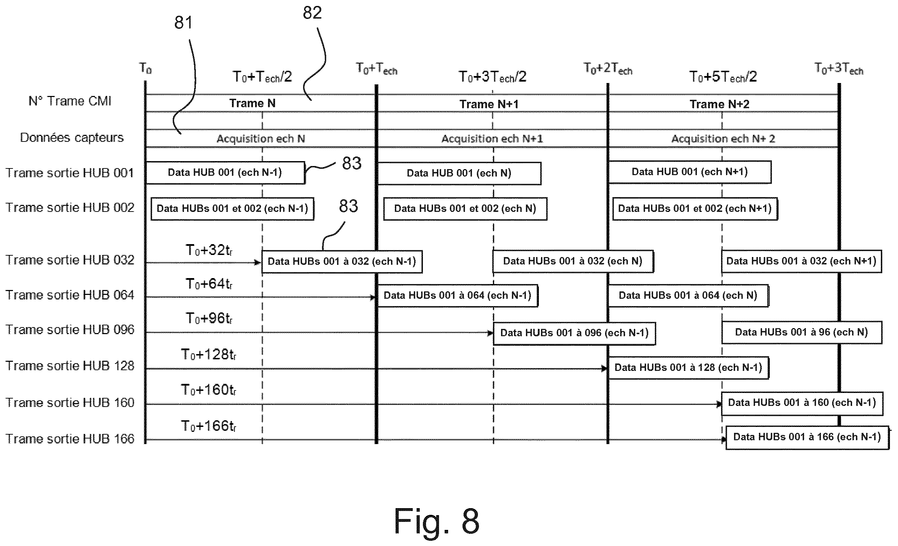

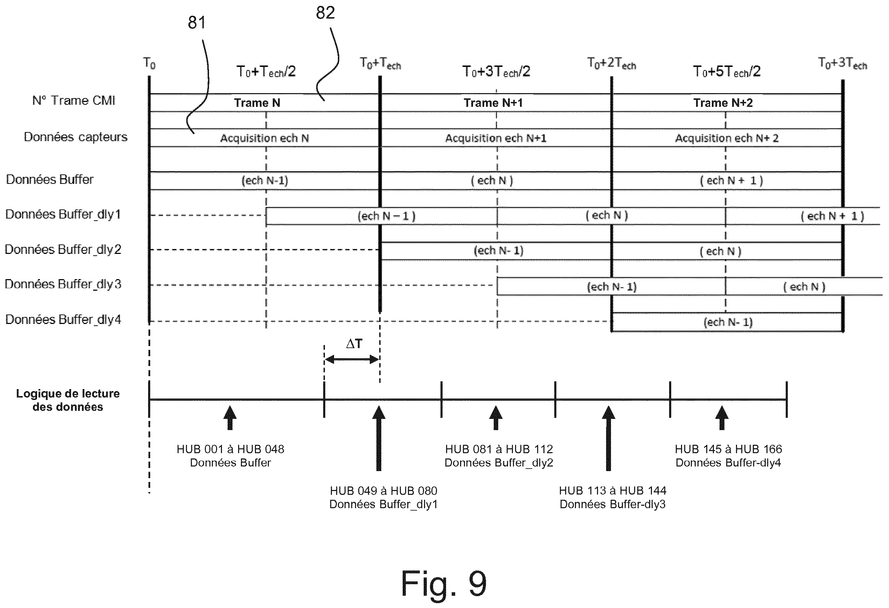

Le principe de synchronisation du mécanisme d'insertion des données des HUBs dans le flux de données tout au long d'une antenne, tel qu'il est implémenté par le système selon l'invention, est illustré par les figures 8 et 9.

Comme l'illustre la figure 8, les données 81 (échantillons N par exemple) créées localement au sein d'un HUB de rang n (numérisation des signaux délivrés par les senseurs connectés au $HUB_n$) pendant une période d'échantillonnage

$T_N$, de durée $T_{ech}$, d'une trame courante 82 (trame N par exemple) ne peuvent être, au mieux, prises en compte par la fonction ADM du $HUB_n$ considéré pour insertion dans le flux de données antenne qu'à partir de la trame suivant la trame courante (trame N+1), la trame N étant alors consacrée à l'acquisition des données capteurs.

Par ailleurs en fonction de l'emplacement du $HUB_n$ considéré dans l'antenne, celui-ci ne reçoit la trame de données correspondant à une période d'échantillonnage $T_N$ donnée, localisée entre un instant $T_0$ et un instant $T_0+T_{ech}$ qu'au bout d'un lapse de temps donné $\delta t_n = n \cdot t_r$ multiple du temps $t_r$ nécessaire à un HUB pour prendre en compte la trame de données transmise par le HUB précédent et y insérer les données capteurs correspondant à cette trame.

Le Hub ne peut ainsi délivrer la trame de données complétée 83 ainsi produite qu'après le lapse de temps $\delta t_n$, qui correspond ainsi au temps de propagation de ladite trame de donnée au travers de la chaine de transmission constituée par l'ensemble des HUBs situés en amont du HUB considéré, depuis le HUB de queue (HUB 001).

Par conséquent le fonctionnement d'un HUB de rang n doit prendre en compte cette double contrainte temporelle constituée par le retard systématique d'une période d'échantillonnage, commun à tous les HUBs, et par le retard de propagation $\delta t = n \cdot t_r$ qui dépend de la position du HUB considéré dans la chaine des HUBs constituant l'antenne. Ce double retard détermine donc le moment où un HUB de rang donné est en mesure d'insérer les données capteurs acquises au cours d'une période donnée d'échantillonnage $T_N$ dans la trame de données correspondante, moment pour lequel les données échantillonnées en question doivent être toujours disponibles.

Ainsi par exemple dans le cas illustré par la figure 8, on constate que compte tenu du retard de traitement $t_r$ introduit par chaque HUB, les HUBs des rangs 1 à 63 sont en mesure de commencer à délivrer au HUB suivant une trame de données complétée de leurs propres données capteurs, pendant la période d'échantillonnage $T_N$ qui suit la période $T_{N-1}$ durant laquelle les données capteurs ont été acquises. En revanche on constate que les HUBs des rangs 64 à 127 ne sont en mesure de la faire que durant la période $T_{N+1}$, alors que les HUBs des rangs 128 à 166 (dernier HUB de la série dans l'exemple de la figure 8) ne sont en mesure de la faire que durant la période $T_{N+2}$.

Selon l'invention, pour pouvoir prendre en compte ce double retard, chaque HUB dispose d'une batterie de registres tampons (Buffer, Buffer_$dly_1$, ..., Buffer_$dly_M$) dans lesquels les données capteurs échantillonnées 81 sont stockées, au rythme de la période $T_{ech}$. Une même donnée est ainsi d'abord mémorisée dans le premier registre tampon (Buffer) puis successivement dans chacun des registres tampons suivants (Buffer_dlyn). Les instants de chargement d'une donnée dans les différents registres étant décalés d'un intervalle de temps donné, la batterie de registres tampons forme ainsi une structure de registre à décalage qui permet, quel que soit le HUB considéré, de mémoriser une même donnée 81 durant la période de temps nécessaire pour pouvoir être insérée dans la trame de données correspondante.

Selon l'invention, cet intervalle résulte d'un compromis entre la volonté de s'assurer que toutes les données capteurs 81 correspondant à une période d'échantillonnage $T_N$, soient mémorisées durant un temps suffisant pour assurer leur disponibilité en temps utiles et que ces données restent présentes au niveau du registre tampon dans lequel elles sont accessibles, durant un temps suffisant pour que le HUB puisse les insérer dans la trame 83 à laquelle elles correspondent. Le choix de l'intervalle, et donc du nombre de registres tampons, prend en compte également la nécessité de limiter le nombre de registres tampons utilisés de façon à limiter le nombre de composants électroniques que doit renfermer le HUB.

Dans l'exemple des figures 8 et 9, cet intervalle de temps est choisi égal à la moitié de la durée $T_{ech}$ d'une période d'échantillonnage, de sorte que la mémorisation des données capteurs 81 pendant trois périodes d'échantillonnages, durée nécessaire, dans cet exemple, pour les HUBs situés les plus en aval, nécessite la mise en œuvre d'une batterie de cinq registres tampons (Buffer, et Buffer_dly1 à Buffer_dly4).

Par ailleurs, on choisit de limiter le nombre de HUBs successifs pour lesquels les données capteurs 81 correspondant à une période d'échantillonnage $T_N$, sont extraites d'un même registre tampon, aux seuls HUBs capables de débuter l'émission de la trame de données 83 correspondante (Trame N) à destination du HUB suivant, avant un instant limite précédant, d'un intervalle de temps $\Delta T$, l'instant de chargement dans le registre considéré de nouvelles données capteurs, correspondant à la période d'échantillonnage $T_{N+1}$.

De la sorte si, dans l'exemple illustré par les figures 8 et 9, on considère en particulier la formation de la trame N-1 de données antenne correspondant à une période d'échantillonnage $T_{N-1}$, les HUBs situés les plus en amont (HUB 001 à HUB 048) effectueront l'insertion dans la trame N-1 des données capteurs 83 recueillies durant la période $T_{N-1}$, au cours de la période $T_N$, ces données étant prélevées, au niveau de chacun de ces HUBs, dans le premier registre tampon (Buffer).

A l'opposé, les HUBs situés les plus en aval (HUB 145 à HUB 166) effectueront, l'insertion dans la trame N-1 des données capteurs recueillies durant la période $T_{N-1}$, au cours de la période $T_{N+2}$, ces données étant prélevées, au niveau de chacun de ces HUBs, dans le dernier registre tampon (Buffer_dly4) .

Le mécanisme décrit précédemment permet ainsi avantageusement aux différents HUBs constituant le système selon l'invention de présenter une structure et un mode de fonctionnement identiques, aussi bien en ce qui concerne la sécurisation de la chaine de transmission des données vers la tête antenne, qu'en ce qui concerne la synchronisation nécessaire à l'insertion des données capteurs, collectées à chaque période d'échantillonnage, dans le flux de données qui réalise la remontée des données capteurs vers la tête antenne. Un même HUB peut ainsi occuper n'importe quelle place dans la chaine de HUB constituant une antenne.

Le traitement proposé est simple. L'ensemble des données est dupliqué dans les deux sorties. Les deux entrées sont scrutées en permanence et en parallèle. Si l'une des deux trames contient des informations erronées suite à une panne dans la chaine de hub, l'information manquante est récupérée immédiatement dans l'autre trame.

## Revendications

1. Système de collecte des données fournies par une chaine de capteurs constituant une antenne acoustique linéaire, la collecte et la remontée des données vers le système de collecte des données de l'antenne étant organisées autour de modules d'acquisition des données capteurs, ou HUBs, chaînés les uns aux autres, chaque HUB gérant la collecte et la remontée des données produites par un nombre donné de capteurs;
ledit système étant **caractérisé en ce que** chaque HUB de rang n ($HUB_n$) est configuré pour:

   - recevoir simultanément, sur une première entrée, reliée au HUB de rang n-1 situé immédiatement en amont ($HUB_{n-1}$), un flux de données capteurs constituant une première suite de trames de données provenant dudit HUB et sur une seconde entrée, reliée au HUB situé i rangs en amont ($HUB_{n-i}$), un flux de données capteurs constituant une seconde suite de trames de données provenant de ce dernier, i étant supérieur à 1;
   - intégrer dans chaque trame de données, reçue sur la première ou la seconde entrée selon la présence ou non d'un flux de données sur l'une ou l'autre des entrées, les données capteurs synchrones de ladite trame, produites par les différents capteurs gérés par lui et produire une trame complétée; et
   - délivrer cette trame complétée sur deux sorties séparées, reliées respectivement au HUB situé immédiatement en aval ($HUB_{n+1}$) et au HUB situé i rangs en aval ($HUB_{n+i}$).

2. Système selon la revendication 1, **caractérisé en ce que** chaque HUB comporte une première batterie de registres configurée pour permettre la mémorisation des données capteurs produites à chaque période d'échantillonnage, le temps nécessaire pour permettre leur intégration à la trame de données correspondant à la même période d'échantillonnage.

3. Système selon l'une des revendications 1 ou 2, **caractérisé en ce que**, i étant égal à 3, chaque HUB de rang n ($HUB_n$) est configuré de telle sorte que si un flux de données est présent sur sa première entrée, ledit $HUB_n$ intègre, à chacune des trames successives transmises par le HUB situé immédiatement en amont ($HUB_{n-1}$) et reçues sur cette première entrée, les données synchrones de ladite trame produites par les différents capteurs gérés par lui, et produit une trame complétée qu'il transmet au HUB situé immédiatement en aval ($HUB_{n+1}$) et au HUB situé trois rangs en aval ($HUB_{n+3}$).

4. Système selon l'une des revendications 1 ou 2, **caractérisé en ce que**, i étant égal à 3, chaque HUB de rang n ($HU_{Bn}$) est configuré de telle sorte que si aucun flux de données n'est présent sur sa première entrée, ledit $HUB_n$ intègre, à chacune des trames successives reçues sur sa seconde entrée, les données synchrones de ladite trame produites par les différents capteurs gérés par lui et produit une trame complétée qu'il transmet au HUB situé immédiatement en aval ($H_{UBn+1}$) et au HUB situé trois rangs en aval ($HUB_{n+3}$).

5. Système selon l'une de revendications 3 ou 4, **caractérisé en ce que** chaque HUB de rang n ($HUB_n$) est configuré de telle sorte que si un flux de données est présent sur chacune de ses entrées, ledit $HUB_n$ intègre, à chacune des trames successives reçues par sa première entrée, les données synchrones de ladite trame produites par les différents capteurs gérés par lui ainsi que les données produites par les différents capteurs gérés par le HUB de rang n-3 ($HUB_{n-3}$), recueillies sur la trame de données reçue sur sa seconde entrée synchrone de la trame de données reçue sur sa première entrée, et produit une trame complétée qu'il transmet au HUB situé immédiatement en aval ($HUB_{n+1}$) et au HUB situé trois rangs en aval ($HUB_{n+3}$).

6. Système selon la revendication 5, **caractérisé en ce que** chaque HUB comporte en outre une seconde batterie de registres configurée pour permettre la mémorisation des données produites par le HUB de rang n-3 ($HUB_{n-3}$) à chaque période d'échantillonnage le temps nécessaire pour permettre leur intégration à la trame de données correspondant à la même période d'échantillonnage.

## Patentansprüche

1. System zum Sammeln der Daten, die von einer Reihe von eine lineare akustische Antenne bildenden Sensoren bereitgestellt werden, wobei das Sammeln und das Übertragen der Daten an das System zum Sammeln der Daten der Antenne um aneinandergereihte Module zur Erfassung der Sensordaten, oder HUBs, organisiert ist, wobei jeder HUB das Sammeln und das Übertragen der von einer gegebenen Anzahl von Sensoren erzeugten Daten verwaltet; wobei das System **dadurch gekennzeichnet ist, dass** jeder HUB n-ten Rangs ($HUB_n$) zu Folgendem konfiguriert ist:

- gleichzeitiges Empfangen, an einem ersten Eingang, der mit dem unmittelbar vorgeschalteten HUB des Rangs n-1 ($HUB_{n-1}$), verbunden ist, eines Sensordatenstroms, der eine erste Folge von aus dem HUB stammenden Datenrahmen darstellt, und an einem zweiten Eingang, der mit dem um i Ränge vorgeschalteten HUB ($HUB_{n-i}$) verbunden ist, eines Sensordatenstroms, der eine aus letzterem stammende zweite Folge von Datenrahmen darstellt, wobei i größer als 1 ist;
- Integrieren der synchronen Sensordaten des Rahmens, die von den verschiedenen von ihm verwalteten Sensoren erzeugt werden, in jeden Datenrahmen, der am ersten oder am zweiten Eingang empfangen wird, je nachdem, ob ein Datenstrom an einem oder dem anderen der Eingänge vorhanden ist, und Erzeugen eines vervollständigten Rahmens; und
- Ausgeben dieses vervollständigten Rahmens an zwei getrennten Ausgängen, die jeweils mit dem unmittelbar nachgeschalteten HUB ($HUB_{n+1}$) und dem um i Ränge nachgeschalteten HUB ($HUB_{n+i}$) verbunden sind.

2. System nach Anspruch 1, **dadurch gekennzeichnet, dass** jeder HUB einen ersten Satz von Registern umfasst, der so konfiguriert ist, dass er die Speicherung der in jeder Abtastperiode erzeugten Sensordaten ermöglicht, wobei die Zeit, die für ihre Integration an dem Datenrahmen erforderlich ist, der gleichen Abtastperiode entspricht.

3. System nach einem der Ansprüche 1 oder 2, **dadurch gekennzeichnet, dass**, wobei i gleich 3 ist, jeder HUB des n-ten Rangs ($HUB_n$) so konfiguriert ist, dass, wenn an seinem ersten Eingang ein Datenstrom vorhanden ist, der $HUB_n$ an jedem der aufeinanderfolgenden Rahmen, die vom unmittelbar vorgeschalteten HUB ($HUB_{n-1}$) übertragen und an diesem ersten Eingang empfangen werden, die synchronen Daten des Rahmens, die von den verschiedenen von ihm verwalteten Sensoren erzeugt werden, integriert und einen vervollständigten Rahmen erzeugt, den er an den unmittelbar nachgeschalteten HUB ($HUB_{n+1}$) und an den um drei Ränge nachgeschalteten HUB ($HUB_{n+3}$) überträgt.

4. System nach einem der Ansprüche 1 oder 2, **dadurch gekennzeichnet, dass**, wobei i gleich 3 ist, jeder HUB des n-ten Rangs ($HUB_n$) so konfiguriert ist, dass, wenn an seinem ersten Eingang kein Datenstrom vorhanden ist, der $HUB_n$ an jedem der aufeinanderfolgenden Rahmen, die an seinem zweiten Eingang empfangen werden, die synchronen Daten des Rahmens, die von den verschiedenen von ihm verwalteten Sensoren erzeugt werden, integriert und einen vervollständigten Rahmen erzeugt, den er an den unmittelbar nachgeschalteten HUB ($HUB_{n+1}$) und an den um drei Ränge nachgeschalteten HUB ($HUB_{n+3}$) überträgt.

5. System nach einem der Ansprüche 3 oder 4, **dadurch gekennzeichnet, dass** jeder HUB des n-ten Rangs ($HUB_n$) so konfiguriert ist, dass, wenn an jedem seiner Eingänge ein Datenstrom vorhanden ist, der $HUB_n$ an jedem der aufeinanderfolgenden Rahmen, die an seinem ersten Eingang empfangen werden, die synchronen Daten des Rahmens, die von den verschiedenen von ihm verwalteten Sensoren erzeugt werden, sowie die Daten, die von den verschiedenen Sensoren erzeugt werden, die vom HUB des Rangs n-3 ($HUB_{n-3}$) verwaltet werden, die an dem Datenrahmen gesammelt werden, der an seinem zweiten synchronen Eingang empfangen wird, von dem Datenrahmen, der an seinem ersten Eingang empfangen wird, integriert und einen vervollständigten Rahmen erzeugt, den er an den unmittelbar nachgeschalteten HUB ($HUB_{n+1}$) und an den um drei Ränge nachgeschalteten HUB ($HUB_{n+3}$) überträgt.

6. System nach Anspruch 5, **dadurch gekennzeichnet, dass** jeder HUB ferner einen zweiten Satz von Registern umfasst, der so konfiguriert ist, dass er die Speicherung der in jeder Abtastperiode vom HUB des Rangs n-3 ($HUB_{n-3}$) erzeugten Daten ermöglicht, wobei die Zeit, die für ihre Integration an den Datenrahmen erforderlich ist, der gleichen Abtastperiode entspricht.

**Claims**

1. A system for collecting the data provided by a chain of sensors constituting a linear acoustic antenna, the collection and the uploading of the data to the system for collecting the data of the antenna being organised around modules for acquiring the sensor data, or HUBs, chained together, each HUB managing the collection and the uploading of the data produced by a given number of sensors;
said system being **characterised in that** each HUB of rank n ($HUB_n$) is configured to:

- receive simultaneously, on a first input, linked to the HUB of rank n-1 situated immediately upstream ($HUB_{n-1}$), a stream of sensor data constituting a first string of data frames originating from said HUB and on a second input, linked to the HUB situated i ranks upstream ($HUB_{n-i}$), a stream of sensor data constituting a second string of data frames originating from the latter, i being greater than 1;

- integrate into each data frame, received on the first or the second input according to the presence or absence of a data stream on one or the other of the inputs, the synchronous sensor data of said frame, produced by the various sensors managed by it and produce a supplemented frame; and

- deliver this supplemented frame on two separate outputs, linked respectively to the HUB situated immediately downstream ($HUB_{n+1}$) and to the HUB situated i ranks downstream ($HUB_{n+i}$).

2. The system according to claim 1, **characterised in that** each HUB contains a first battery of registers configured to allow the storage of the sensor data produced at each sampling period, the time required to allow their integration at the data frame corresponding to the same sampling period.

3. The system according to one of claims 1 or 2, **characterised in that**, i being equal to 3, each HUB of rank n ($HUB_n$) is configured in such a way that if a data stream is present on its first input, said $HUB_n$ integrates, at each of the successive frames which are transmitted by the HUB situated immediately upstream ($HUB_{n-1}$) and are received on this first input, the synchronous data of said frame which are produced by the various sensors managed by it, and produces a supplemented frame that it transmits to the HUB situated immediately downstream ($HUB_{n+1}$) and to the HUB situated three ranks downstream ($HUB_{n+3}$).

4. The system according to one of claims 1 or 2, **characterised in that**, i being equal to 3, each HUB of rank n ($HUB_n$) is configured in such a way that if no data stream is present on its first input, said $HUB_n$ integrates, at each of the successive frames received on its second input, the synchronous data of said frame which are produced by the various sensors managed by it, and produces a supplemented frame that it transmits to the HUB situated immediately downstream ($HUB_{n+1}$) and to the HUB situated three ranks downstream ($HUB_{n+3}$).

5. The system according to one of claims 3 or 4, **characterised in that** each HUB of rank n ($HUB_n$) is configured in such a way that if a data stream is present on each of its inputs, said $HUB_n$ integrates, at each of the successive frames received by its first input, the synchronous data of said frame which are produced by the various sensors managed by it as well as the data which are produced by the various sensors managed by the HUB of rank n-3 ($HUB_{n-3}$), gathered on the data frame received on its second synchronous input of the data frame received on its first input, and produces a supplemented frame that it transmits to the HUB situated immediately downstream ($HUB_{n+1}$) and to the HUB situated three ranks downstream ($HUB_{n+3}$).

6. The system according to claim 5, **characterised in that** each HUB further contains a second battery of registers configured to allow the storage of the data produced by the HUB of rank n-3 ($HUB_{n-3}$) at each sampling period, the time required to allow their integration at the data frame corresponding to the same sampling period.

Fig. 1

Fig. 2

Fig. 3

Fig. 4

Synchro Antenne

Répéteur sous-système 1 (Synchro, Data)

Répéteur sous-système N (Synchro, Data)

51

52

DAU  DAU  DAU  DAU

Module Support

Bus Data Sous-système 1

Module Support

52

54

Alimentation sous-système 1

53

52

53

DAU  DAU  DAU  DAU

Module Support

Bus Data Sous-système N

Module Support

52

54

Alimentation sous-système N

53

53

Fig. 5

Fig. 6

Fig. 7

Fig. 8

Fig. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2869091 A